# EUROPEAN PATENT SPECIFICATION

(11) **EP 4 072 900 B1**
(45) Date of publication and mention of the grant of the patent: **14.08.2024**
(21) Application number: 20821421.3
(22) Date of filing: 10.12.2020
(51) Int. Cl.: B60N 2/60

(54) **COVER FOR SEATS**
SITZBEZUG
HOUSSE POUR SIÈGES

(30) Priority: 11.12.2019 IT 201900023592
(43) Date of publication of application: 19.10.2022
(73) Proprietor: Confezioni Andrea Italia S.r.l., 21020 Bodio Lomnago (VA) (IT)
(72) Inventor: FIDANZA, Federico, 21029 Vergiate (VA) (IT); TAVELLI, Andrea, 21010 Castelveccana (VA) (IT)
(74) Representative: Rapisardi, Mariacristina
(86) International application number: PCT/IB2020/061746
(87) International publication number: WO 2021/116970

(56) References cited:
- EP-A1- 2 913 224
- DE-C1- 4 132 714

## Description

The present invention relates to a cover for seats, in particular for seats in the automotive sector.

As is known, covers for seats of vehicles are used in order to prevent it getting dirty or stained prior to the sale of the vehicle during transport or exposure in a dealership.

Such covers for seats are also used in workshops to prevent the seats from getting dirty or contaminated by substances during the vehicle repair and maintenance operations.

Therefore, covers for seats that are generally made in the form of a bag open at one end exist, through which they are fitted onto the seats. For example, these covers for seats can be made of plastic film or non-woven fabric and so on.

Another known type of covers for seats is comprised of two superposed sheets joined along their perimeter.

Once applied, there is a first portion that covers the front part of the seat and a second portion that covers the rear part. These covers for seats can also be made of plastic film or non-woven fabric. Furthermore, these covers for seats imply production processes that are not very efficient. In fact, it is necessary for the sealing and sewing operations on the edges to be performed manually, which implies high costs and long production process times.

In any case, when the covers are made of non-woven fabric they do not adhere well to the seat itself and need elastic bands or other accessories to make this happen. This implies a further increase in costs.

DE 4132714 discloses a cover for seats without a layer of stretch non-woven fabric and with the opening not arranged confined under the sitting portion of the seat.

The object of the present invention is that of making a cover for seats that can overcome the drawbacks mentioned above and in particular to design a cover for seats that is cheaper and quicker to produce with respect to the prior art.

Another object of the present invention is that of making a cover for seats that is easy to apply and that enables good adherence to the seat onto which it is fitted. These and other objects according to the present invention are reached by making a cover for seats and a method for making such cover as set out in the independent claims 1 and 7.

Further characteristics of the cover for seats are the subject matter of the dependent claims. Further characteristics and advantages will become clearer from the following description, provided by way of non-limiting example, with reference to the appended schematic drawings in which:
- figure 1 is a front view of a first embodiment of a cover for a seat according to the present invention;
- figure 2 is a second view of the rear of the cover for a seat of figure 1;

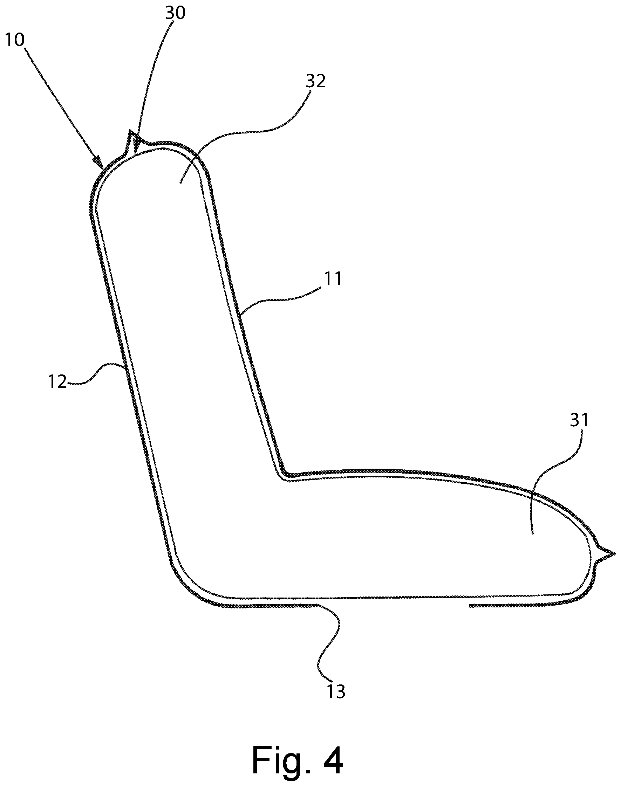

- figure 3 is a front view of the sheet comprised in the cover of figures 1 and 2 in the extended position; - figure 4 is a view of the cover of figures 1 and 2 applied to a seat;
- figure 5 is a front view of a second embodiment of a cover for a seat according to the present invention;
- figure 6 is a view of the rear of the cover for a seat of figure 5;
- figure 7 is a front view of the sheet comprised in the cover of figures 5 and 6 in the extended position;

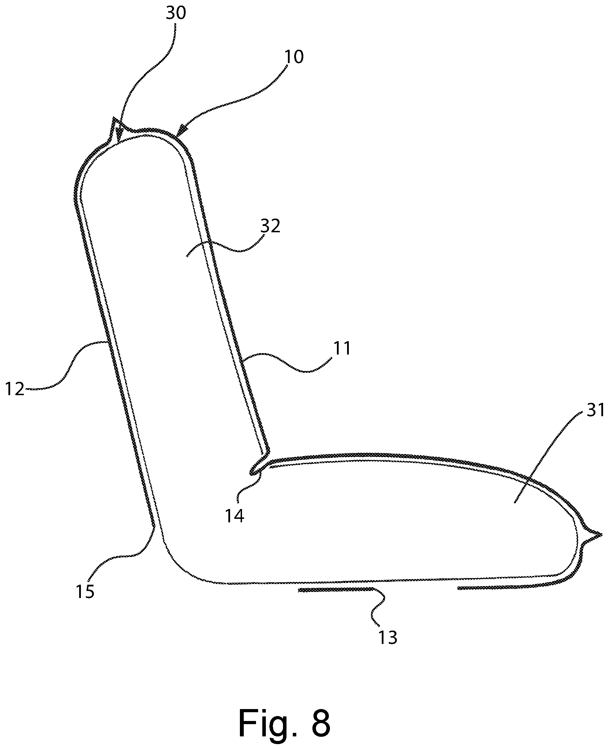

- figure 8 is a side view of the cover of figures 5 and 6 applied to a seat;
- figure 9 is a front view of a third embodiment of a cover for a seat according to the present invention;
- figure 10 is a view of the rear of the cover for a seat of figure 9;
- figure 11 is a front view of the sheet comprised in the cover of figures 9 and 10 in the extended position;

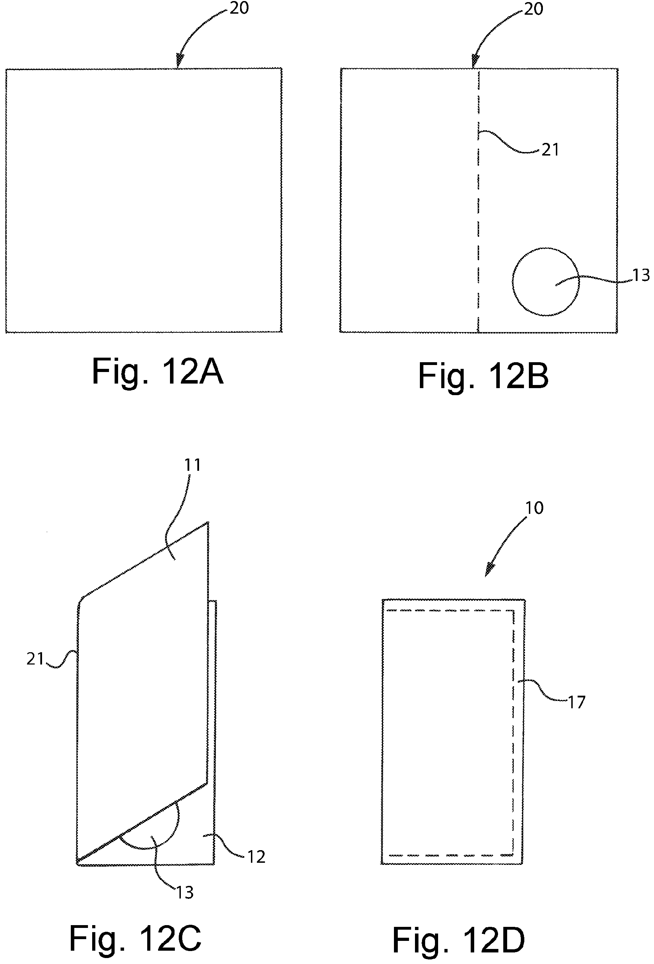

- figures 12A, 12B, 12C and 12D are views, respectively, of the different steps of the method for making the cover for seats of figure 1.

With reference to the mentioned figures a cover for a seat 30 of a vehicle is shown, indicated overall with the reference number 10.

The seat 30 has a sitting portion 31 and a back portion 32. Sitting portion 31, in particular, means the part of the seat that includes the cushion on which the user will sit.

In the present description the terms or expressions "front", "rear", "towards the top", "towards the bottom", "above", "below" and the like refer to the use configuration of the cover 10 when it is applied to the seat 30.

The cover 10 extends in length along a longitudinal direction X.

The cover 10 comprises a single sheet 20 folded along a longitudinal folding line 21 so as to define a first portion 11 intended to at least partially cover the front portion of the seat 30 and a second portion 12 intended to at least partially cover the rear portion of the seat 30.

Front part of the seat means the part of the sitting portion and of the back on which a user is intended to rest during normal use. The rear part is opposite to the front part; therefore, during normal use, the rear part of the seat portion 11 faces downwards or towards the base of the vehicle when the seat is assembled in the vehicle.

The first portion 11 and the second portion 12 are superposed with one another and joined together along the perimeter by connection lines 17 so that said cover 10 is closed along the perimeter. In particular, beyond the edge represented by the folding line 21 the two portions 11, 12 are joined continuously along their perimeter on the remaining free edges.

Preferably, the connection lines 17 are made by welding, e.g. pulse or ultrasonic heat sealing, or sewing or gluing.

The second portion 12 further comprises an opening 13 to enable the insertion of the seat 30 into the cover 10. Advantageously, the sheet 20 comprises at least one layer of stretch non-woven fabric.

Stretch non-woven fabric means a non-woven fabric that has elastic properties i.e. that must be able to allow elastic elongation greater than 250, preferably from 40% to 150%, in order to be able to allow the easy application of the seat cover and at the same time ensure maximum adhesion to the outlines of the seat. For example, the non-woven fabric has an elongation of 25% when it extends in one or more directions respectively of 25% more than its extension in the rest condition, i.e. when it is not being pulled.

Preferably, the at least one layer of non-woven fabric considered has polypropylene or polyethylene or polyamide fibres or the like.

The sheet 20 can have a single layer and in that case it is comprised only of the layer of stretch non-woven fabric or it may be multi-layer, laminated or unlaminated.

In the event in which the sheet is a single layer or a single layer laminated with the same material as the layer of recyclable stretch non-woven fabric, the sheet 20 may be 100% recyclable.

Preferably, the at least one layer of non-woven fabric has a grammage (weight/square centimetre) comprised between 12 g and 60 g and it is of inhomogeneous fibre type so as to appear semi transparent, thus enabling an overall inspection of the seat 30 when the cover 10 is applied thereto.

In particular, non-woven fabric with inhomogeneous fibres means non-woven fabric that has within its structure fibres of inhomogeneous dimensions comprised for example of 2 to 15 glued threads, arranged casually in all directions so as to create a spotted or cloud effect. In other words where the non-woven fabric has larger fibres or that are closer to one another it is thicker and more opaque with respect to the areas in which the non-woven fabric has smaller or more distanced fibres. The non-uniform distribution of the fibres further causes a +/- 5% variation of the grammage across the entire surface of the sheet 20.

The non-woven fabric is semi-transparent thanks to the grammage chosen in the interval reported above and the cloud effect deriving from the use of inhomogeneous fibres arranged in a non-uniform way across the area of the sheet 20 itself.

The sheet 20 may be white or coloured.

Preferably, the non-woven fabric used has a friction coefficient from 0.05 to 0.20 so as not to irritate the user sitting on the seat 30 onto which the cover 20 is applied.

In any case, it is a material with high breaking strength.

Preferably, the sheet 20 is antistatic. The opening 13 is positioned and sized so as to remain confined below the portion of seat 12, i.e. in the rear part of the portion of seat 12, when the cover 10 is applied to the seat 30. Such characteristic enables a more complete protection of the seat 30 from dirt as the rear part of the portion of seat 12 is turned downwards during normal use of the seat, and there is therefore less risk of dust or anything else entering.

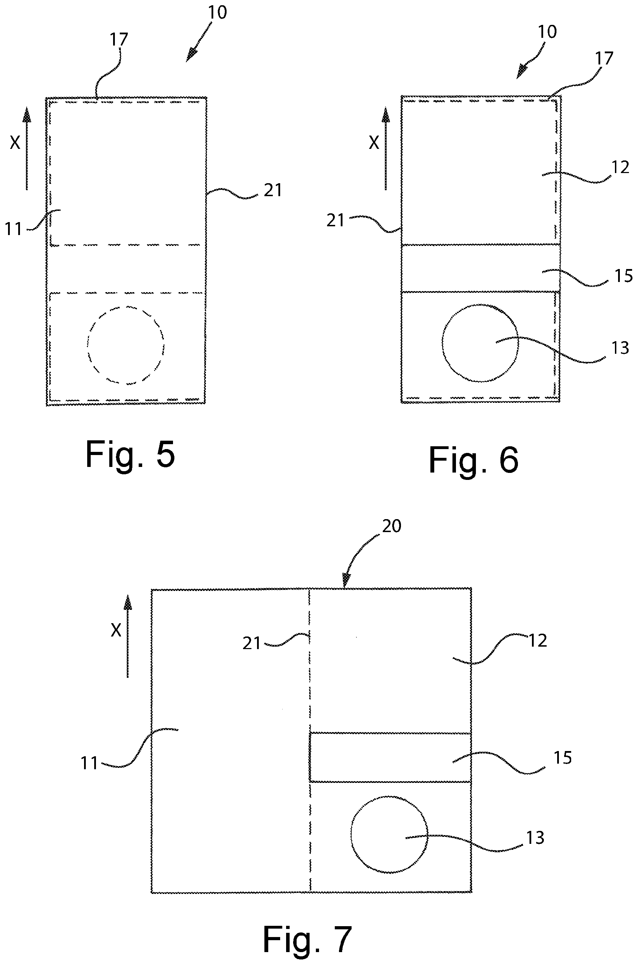

In an embodiment of the present invention such as the one illustrated in figures 5 and 6, the first portion 11 has a longitudinal extension such as to define an auxiliary protection portion 14 intended to be inserted within the interspace between the sitting portion 31 and the back portion 32 when the cover 10 is applied to the seat 30; in that case, the second portion 12 has a transverse band opening 15 in a position corresponding to the auxiliary protection portion 14. The auxiliary protection portion 14 reduces the risk of the penetration of dust and dirt into the interspace between the sitting portion 31 and the back portion 32 which is an area that is difficult to access for cleaning operations.

The transverse band opening 15 prevents an excess of material hanging or dangling forming behind the seat at the transition zone between the sitting portion 31 and the back 32 which could even hinder free movement within the vehicle.

The transverse band opening 15 extends along the entire cross extension of the second portion 12.

Preferably, the folding line 21 of the sheet 20 is positioned in such a way to be facing towards a door of the vehicle, when the cover 10 is applied to the seat 30.

The latter characteristic implies a reduction in the risk of wear of the cover 10 on the door side which, being the entrance into the vehicle, is normally subject to the risks of accidental tearing and breakage.

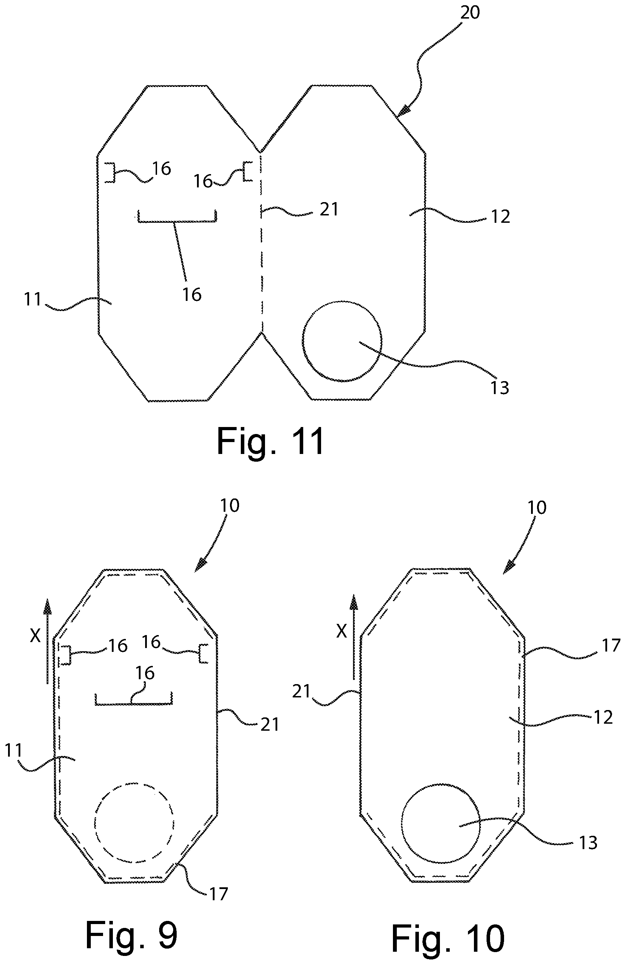

In one embodiment such as for example the one shown in figures 9 and 10 the first portion 11 has one or more cutting lines 16 for having partial access to the seat 30.

The method for making the cover 10 according to the present invention comprises the steps of:
- arranging the sheet 20 constituted of stretch non-woven fabric;
- making at least one opening 13 on the sheet 20, for example through a cutting operation;
- folding the sheet 20 along the folding line 21 so as to define the first portion 11 and the second portion 12 overlapped to each other;
- coupling along the perimeter the free edges of the first portion 11 and of the second portion 12 creating connection lines 17.

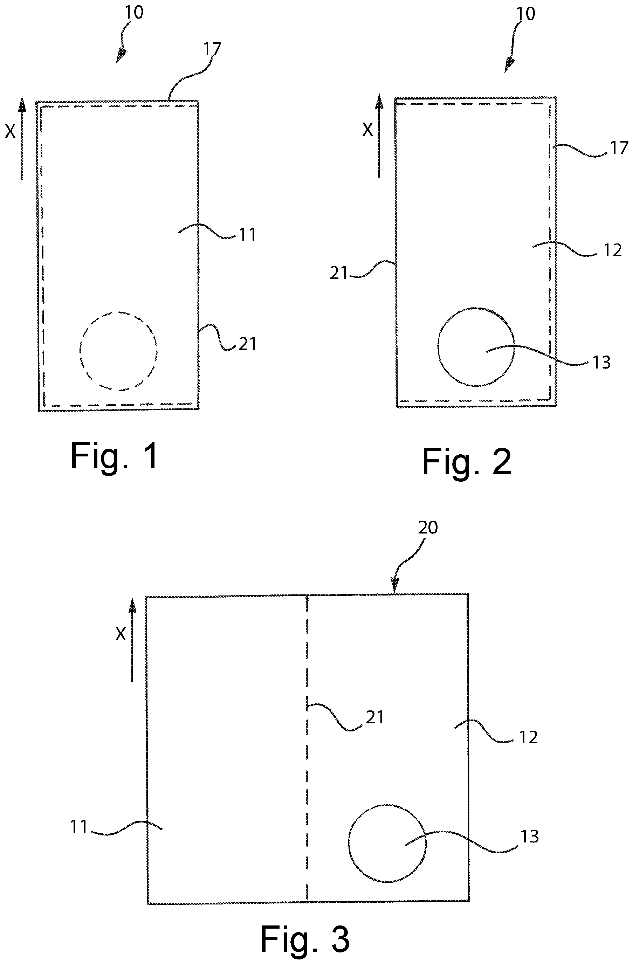

Preferably the sheet 20 in the extended configuration is substantially square shaped such as, for example, in the embodiments of figures 3 and 7.

In that case, a substantial reduction of waste as well as high process flexibility are obtained as, starting from such shape, it is possible to obtain any shape through cutting operations.

Extended configuration means the configuration in which the sheet 20 is not yet folded to form the first portion 11 and the second portion 12.

Alternatively the sheet 20 in the extended configuration has any shape suitable to follow the lines of a seat 30 such as for example the shape illustrated in figure 11. Preferably, the method comprises the step of subjecting the sheet 20 to an anti-static spray treatment.

From the description provided, the characteristics of a cover for a seat of the vehicle according to the present invention are clear, as are the related advantages.

In fact, the cover according to the present invention being comprised of a single folded sheet is simple and cheap to make as it requires fewer manual operations. Furthermore, as the sheet is comprised of stretch non-woven fabric, the cover is resistant to breaking and at the same time guarantees good adhesion to the profile of the seats.

Finally, in the event in which the sheet is comprised of stretch non-woven fabric with inhomogeneous fibres, it also enables an overall inspection of the seat. Finally, it is to be understood that the cover as conceived herein is susceptible to many modifications and variations, all falling within the invention; furthermore, all the details are replaceable by technically equivalent elements. In practice, the materials used, as well as the dimensions thereof, can be of any type according to the technical requirements.

## Claims

1. A cover (10) for a seat (30) of a vehicle, wherein said seat provides a sitting portion (31) and a back portion (32), said cover (10) extending in length along a longitudinal direction (X) and comprising a single sheet (20) folded along a longitudinal folding line (21) so as to define a first portion (11) intended to at least partially cover the front portion of the seat (30) and a second portion (12) intended to at least partially cover the rear portion of the seat (30), said first portion (11) and said second portion (12) being superimposed and coupled to each other along the perimeter by connection lines (17) so that said cover (10) is closed along the perimeter, said second portion (12) comprising an opening (13) to permit the introduction of said seat (30) within said cover (10), **characterised in that** said sheet (20) comprises at least a layer of stretch non-woven fabric, wherein said opening (13) is positioned and dimensioned in such a way to remain confined under said sitting portion (31) when said cover (10) is applied to said seat (30).

2. The cover (10) for a seat of a vehicle according to claim 1, wherein said at least one layer of non-woven fabric has a grammage between 12 gr and 60 gr and it is of inhomogeneous fibers type so as to appear semi transparent.

3. The cover (10) for a seat of a vehicle according to claim 1 or 2, wherein said sheet (20) is antistatic.

4. The cover (10) for a seat of a vehicle according to one of the preceding claims, wherein said connection lines (13) are made in a continuous manner by welding, seaming or gluing.

5. The cover (10) for a seat of a vehicle according to one of the preceding claims, wherein said first portion (11) has a longitudinal extension so as to define an auxiliary protection portion (14) intended to be inserted within the interspace between the sitting portion (31) and the back portion (32) when said cover (10) is applied to said seat (30), said second portion (12) providing a transverse band opening (15) in a position corresponding to said auxiliary protection portion (14).

6. The cover (10) for a seat of a vehicle according to one of the preceding claims, wherein said folding line (21) of said sheet (20) is positioned in such a way to be faced toward a door of a vehicle, when said cover (10) is applied to said seat (30).

7. A process for the realization of a cover (10) for a vehicle seat according to one or more of the preceding claims, **characterized in that** it comprises: - arranging a sheet (20) constituted of stretch non- woven fabric;
- making at least one opening (13) on said sheet (20);
- folding said sheet (20) along a folding line (21) so as to define a first portion (11) and a second portion (12) overlapped to each other;
- coupling along the perimeter the free edges of said first portion (11) and of said second portion (12) by connection lines (17).

8. The process according to claim 7, wherein said sheet (20) when in a extended configuration has a substantially squared shape.

9. The process according to claim 7 or 8, comprising the step of subjecting said sheet (20) to an antistatic spraying step.

## Patentansprüche

1. Ein Bezug (10) für einen Sitz (30) eines Fahrzeugs, wobei der Sitz einen Sitzbereich (31) und einen Rückenbereich (32) aufweist, wobei sich der Bezug (10) in Längsrichtung (X) erstreckt und ein einziges Blatt (20) umfasst, das entlang einer Längsfaltungslinie (21) gefaltet ist, um einen ersten Abschnitt (11) zu definieren, der dazu bestimmt ist, den vorderen Teil des Sitzes (30) zumindest teilweise zu bedecken, und einen zweiten Abschnitt (12) zu definieren, der dazu bestimmt ist, den hinteren Teil des Sitzes (30) zumindest teilweise zu bedecken, wobei der erste Abschnitt (11) und der zweite Abschnitt (12) entlang des Umfangs durch Verbindungslinien (17) übereinandergelegt und miteinander verbunden sind, sodass der Bezug (10) entlang des Umfangs geschlossen ist, wobei der zweite Abschnitt (12) eine Öffnung (13) umfasst, um die Einführung des Sitzes (30) in den Bezug (10) zu ermöglichen, **dadurch gekennzeichnet, dass** das Blatt (20) mindestens eine Schicht aus dehnbarem Vliesstoff umfasst, wobei die Öffnung (13) so positioniert und dimensioniert ist, dass sie unter dem Sitzbereich (31) verbleibt, wenn der Bezug (10) auf den Sitz (30) aufgebracht wird.

2. Der Bezug (10) für einen Fahrzeugsitz nach Anspruch 1, wobei die mindestens eine Schicht aus Vliesstoff ein Flächengewicht zwischen 12 g und 60 g aufweist und aus inhomogenen Fasern besteht, sodass sie halbdurchsichtig erscheint.

3. Der Bezug (10) für einen Fahrzeugsitz nach Anspruch 1 oder 2, wobei das Blatt (20) antistatisch ist.

4. Der Bezug (10) für einen Fahrzeugsitz nach einem der vorhergehenden Ansprüche, wobei die Verbindungslinien (13) auf kontinuierliche Weise durch Schweißen, Nähen oder Kleben hergestellt sind.

5. Der Bezug (10) für einen Fahrzeugsitz nach einem der vorhergehenden Ansprüche, wobei der erste Abschnitt (11) eine Längserweiterung aufweist, um einen Hilfsschutzabschnitt (14) zu definieren, der dazu bestimmt ist, in den Zwischenraum zwischen dem Sitzbereich (31) und dem Rückenbereich (32) eingeführt zu werden, wenn der Bezug (10) auf den Sitz (30) aufgebracht wird, wobei der zweite Abschnitt (12) eine quer verlaufende Bandöffnung (15) an einer Position vorsieht, die dem Hilfsschutzabschnitt (14) entspricht.

6. Der Bezug (10) für einen Fahrzeugsitz nach einem der vorhergehenden Ansprüche, wobei die Faltlinie (21) des Blattes (20) so positioniert ist, dass sie zu einer Tür des Fahrzeugs hin ausgerichtet ist, wenn der Bezug (10) auf den Sitz (30) aufgebracht wird.

7. Ein Verfahren zur Herstellung eines Bezugs (10) für einen Fahrzeugsitz nach einem oder mehreren der vorhergehenden Ansprüche, **dadurch gekennzeichnet, dass** es umfasst:
• Anordnen eines Blattes (20), das aus dehnbarem Vliesstoff besteht,
• Erstellen von mindestens einer Öffnung (13) auf dem Blatt (20);
• Falten des Blattes (20) entlang einer Faltlinie (21), um einen ersten Abschnitt (11) und einen zweiten Abschnitt (12) zu definieren, die übereinander liegen;
• Verbinden der freien Ränder des ersten Abschnitts (11) und des zweiten Abschnitts (12) entlang des Umfangs durch Verbindungslinien (17).

8. Das Verfahren nach Anspruch 7, wobei das Blatt (20) in einer erweiterten Konfiguration eine im Wesentlichen quadratische Form hat.

9. Das Verfahren nach Anspruch 7 oder 8, umfassend den Schritt, das Blatt (20) einem antistatischen Sprühvorgang zu unterziehen.

## Revendications

1. Une housse (10) pour un siège (30) d'un véhicule, dans lequel ledit siège comprend une partie assise (31) et une partie dossier (32), ladite housse (10) s'étendant en longueur selon une direction longitudinale (X) et comprenant une feuille unique (20) pliée le long d'une ligne de pliage longitudinale (21) de manière à définir une première portion (11) destinée à couvrir au moins partiellement la partie avant du siège (30) et une seconde portion (12) destinée à couvrir au moins partiellement la partie arrière du siège (30), ladite première portion (11) et ladite seconde portion (12) étant superposées et couplées l'une à l'autre le long du périmètre par des lignes de connexion (17) de manière à ce que ladite housse (10) soit fermée le long du périmètre, ladite seconde portion (12) comprenant une ouverture (13) pour permettre l'introduction dudit siège (30) à l'intérieur de ladite housse (10), **caractérisée en ce que** ladite feuille (20) comprend au moins une couche de tissu non tissé extensible, ladite ouverture (13) étant positionnée et dimensionnée de manière à rester confinée sous ladite partie assise (31) lorsque ladite housse (10) est appliquée audit siège (30).

2. La housse (10) pour un siège de véhicule selon la revendication 1, dans laquelle ladite au moins une couche de tissu non tissé a un grammage compris entre 12 gr et 60 gr et est du type à fibres inhomogènes de sorte qu'elle apparaisse semi-transparente.

3. La housse (10) pour un siège de véhicule selon la revendication 1 ou 2, dans laquelle ladite feuille (20) est antistatique.

4. La housse (10) pour un siège de véhicule selon l'une des revendications précédentes, dans laquelle lesdites lignes de connexion (13) sont réalisées de manière continue par soudage, couture ou collage.

5. La housse (10) pour un siège de véhicule selon l'une des revendications précédentes, dans laquelle ladite première portion (11) a une extension longitudinale de manière à définir une portion de protection auxiliaire (14) destinée à être insérée dans l'espace intermédiaire entre la partie assise (31) et la partie dossier (32) lorsque ladite housse (10) est appliquée audit siège (30), ladite seconde portion (12) présentant une ouverture en bande transversale (15) en une position correspondant à ladite portion de protection auxiliaire (14).

6. La housse (10) pour un siège de véhicule selon l'une des revendications précédentes, dans laquelle ladite ligne de pliage (21) de ladite feuille (20) est positionnée de manière à faire face à une porte d'un véhicule, lorsque ladite housse (10) est appliquée sur ledit siège (30).

7. Un procédé pour la réalisation d'une housse (10) pour un siège de véhicule selon une ou plusieurs des revendications précédentes, **caractérisé en ce qu'**il comprend :
• disposer une feuille (20) constituée de tissu non tissé extensible ;
• réaliser au moins une ouverture (13) sur ladite feuille (20) ;
• plier ladite feuille (20) le long d'une ligne de pliage (21) de manière à définir une première portion (11) et une seconde portion (12) superposées l'une à l'autre ;
• assembler le long du périmètre les bords libres de ladite première portion (11) et de ladite seconde portion (12) par des lignes de connexion (17).

8. Le procédé selon la revendication 7, dans lequel ladite feuille (20), lorsqu'elle est en configuration étendue, a une forme sensiblement carrée.

9. Le procédé selon la revendication 7 ou 8, comprenant l'étape de soumettre ladite feuille (20) à une pulvérisation antistatique.
